# EUROPÄISCHE PATENTSCHRIFT

(11) **EP 1 616 216 B1**
(45) Veröffentlichungstag und Bekanntmachung des Hinweises auf die Patenterteilung: **07.11.2018**
(21) Anmeldenummer: 04726457.7
(22) Anmeldetag: 08.04.2004
(51) Int. Cl.: G01N 21/64, G02B 21/16, G02B 21/36, B82Y 35/00

(54) **RÄUMLICH HOCHAUFLÖSENDES ABBILDEN**
HIGH RESOLUTION SPATIAL IMAGING
IMAGERIE SPATIALE A HAUTE RESOLUTION

(30) Priorität: 13.04.2003 DE 10317613; 22.04.2003 US 420896; 05.06.2003 DE 10325460
(43) Veröffentlichungstag der Anmeldung: 18.01.2006
(73) Patentinhaber: Max-Planck-Gesellschaft zur Förderung der Wissenschaften e.V., 80539 München (DE)
(72) Erfinder: HELL, Stefan Dr., 37085 Göttingen (DE)
(74) Vertreter: REHBERG HÜPPE + PARTNER
(86) Internationale Anmeldenummer: PCT/EP2004/003767
(87) Internationale Veröffentlichungsnummer: WO 2004/090617

(56) Entgegenhaltungen:
- WO-A-2004/090617
- US-A- 4 288 861
- US-A- 5 289 407
- US-A- 5 731 588
- US-A- 6 046 925
- US-A1- 2003 174 560
- US-B1- 6 184 535
- HELL S W ET AL: "GROUND-STATE-DEPLETION FLUORSCENCE MICROSCOPY: A CONCEPT FOR BREAKING THE DIFFRACTION RESOLUTION LIMIT", APPLIED PHYSICS B: LASERS AND OPTICS, SPRINGER INTERNATIONAL, BERLIN, DE, vol. 60, no. 5, 1 May 1995 (1995-05-01), pages 495-497, XP009074768, ISSN: 0946-2171, DOI: 10.1007/BF01081333
- DYBA M ET AL: "Focal Spots of Size Lamda/23 Open Far-Field Fluorescence Microscopy at 33nm Axial Resolution", PHYSICAL REVIEW LETTERS, AMERICAN PHYSICAL SOCIETY, US, vol. 88, no. 16, 22 April 2002 (2002-04-22), pages 163901-1, XP002305573, ISSN: 0031-9007, DOI: 10.1103/PHYSREVLETT.88.163901

## Beschreibung

Die Erfindung betrifft ein Verfahren zum räumlich hochauflösenden Abbilden einer mit einer Substanz markierten Struktur einer Probe mit den Merkmalen des Oberbegriffs des Patentanspruchs 1.

Die Substanz kann natürlich in der abzubildenden Struktur der Probe vorkommen. Anderenfalls muss die Struktur der Probe künstlich mit der Substanz markiert werden.

### STAND DER TECHNIK

Die räumliche Auflösung abbildender optischer Verfahren wird grundsätzlich durch die Beugungsgrenze (Abbe'sche Grenze) bei der Wellenlänge des relevanten optischen Signals gesetzt.

Es sind aber bereits Verfahren auf dem Gebiet der Fluoreszenzmikroskopie bekannt, bei denen durch Ausnutzung von nichtlinearen Zusammenhängen zwischen der Schärfe des effektiven fokalen Spots und der eingestrahlten Intensität eines optischen Anregungssignals die Beugungsgrenze bei der Abbildung einer Struktur einer Probe effektiv unterschritten wird. Beispiele sind die Multiphotonenabsorption in der Probe oder die Erzeugung höherer Harmonischer des optischen Anregungssignals. Auch eine Sättigung eines optisch induzierten Übergangs kann als nichtlinearen Zusammenhang ausgenutzt werden, wie beispielsweise bei einer Entvölkerung des fluoreszierenden Zustands durch stimulierte Emission (englisch: stimulated emission depletion = STED) oder einer Entvölkerung des Grundzustands (englisch: ground state depletion = GSD). Bei diesen beiden Verfahren, die prinzipiell molekulare Auflösungen erreichen können, wird ein Fluoreszenzfarbstoff, mit dem die interessierende Struktur einer Probe markiert ist, überall dort, wo ein optisches Umschaltsignal einen charakteristischen Grenzwert, der in dieser Beschreibung als Sättigungsgrenzwert bezeichnet wird, überschreitet, in einen Energiezustand versetzt, aus dem heraus keine Fluoreszenz (mehr) erfolgt. Wenn dabei der räumliche Bereich, aus dem dann noch ein Messsignal registriert wird, durch ein lokales Intensitätsminimum des optischen Umschaltsignals festgelegt wird, das eine Nullstelle aufweist und beispielsweise durch Interferenz erzeugt wird, sind seine Abmessungen und damit die erreichte Ortsauflösung kleiner als die Beugungsgrenze. Der Grund ist, dass der räumliche begrenzte Teilbereich, aus dem das Messsignal registriert wird, mit zunehmenden Sättigungsgrad der Entvölkerung des an der Fluoreszenz beteiligten Zustands eingeengt wird. Genauso wird die Kante eines fokalen Spots oder Streifens steiler, was ebenfalls zu einer erhöhten Ortsauflösung führt.

Ein STED-Verfahren mit den Merkmalen des Oberbegriffs des Patentanspruchs 1 ist aus der WO 95/21393 A1 bekannt. Bei diesem Verfahren wird eine Probe bzw. ein Fluoreszenzfarbstoff in der Probe durch ein optisches Anregungssignal zur Fluoreszenz angeregt. Der räumliche Bereich der Anregung, für den die Beugungsgrenze gilt, wird dann verkleinert, indem er mit einem Intensitätsminimum eines Interferenzmusters eines Abregungslichtstrahls als Umschaltsignal überlagert wird. Überall dort, wo das Umschaltsignal einen Sättigungsgrenzwert übersteigt, wird der Fluoreszenzfarbstoff vollständig durch stimulierte Emission ausgeschaltet, d.h. aus dem zuvor angeregten Energiezustand wieder abgeregt. Der verbleibende räumliche Bereich, aus dem anschließend noch Fluoreszenzlicht spontan emittiert wird, entspricht nur noch einem verkleinerten Gebiet um die Nullstelle des Intensitätsminimums, in dem das Umschaltsignal nicht oder nicht mit ausreichender Intensität vorlag. Obwohl dieses Verfahren der Fluoreszenzmikroskopie nachvollziehbar eine Ortsauflösung unterhalb der Beugungsgrenze liefert, ist es auch mit Nachteilen verbunden. Die Lebensdauer des Energiezustands des Fluoreszenzfarbstoffs, der mit dem Anregungsstrahl angeregt wird, ist nur kurz. Damit das Umschalten effektiv innerhalb einer noch kürzeren Zeitspanne komplettiert ist, muss daher eine vergleichsweise hohe Intensität des Umschaltsignals angewandt werden. Damit bei der Abregung durch das Umschaltsignal ein nichtlinearer Zusammenhang zwischen der verbleibenden Fluoreszenz und der Intensität des Umschaltsignals hergestellt wird, d.h. Sättigung erreicht wird, muss die Intensität des Abregungsstrahls zusätzlich sehr hoch sein. So wird in der Regel ein gepulster Hochleistungslaser für den Abregungslichtstrahl benötigt, der die Durchführung des bekannten Verfahrens recht kostspielig macht.

Dieselben Nachteile gelten auch für bekannte GSD-Verfahren, da auch hier Zeitbeschränkungen und Leistungsanforderungen durch kurze Lebensdauern der beteiligten Energiezustände gesetzt werden.

Ein GSD-Verfahren mit den Merkmalen des Oberbegriffs des Patentanspruchs 1 ist aus Hell, S.W. at al., Ground-state-depletion fluorescence microscopy: a concept for breaking the diffraction resolution limit. Applied Physics B: Lasers and Optics, Springer International, Berlin, Bd. 60, Nr. 5, 1. Mai 1995, Seiten 495, 497, ISSN: 0946-2171, DOI: 10.1007/BF01 081333 bekannt. Auch bei diesem Verfahren wird eine Probe bzw. ein Fluoreszenzfarbstoff in der Probe durch ein optisches Anregungssignal zur Fluoreszenz angeregt. Um dabei den räumlichen Bereich, aus dem Fluoreszenzlicht spontan emittiert wird, zu verkleinern, wird noch vor jedem Puls des Anregungslichts ein Umschaltsignal auf die Probe gerichtet, das dieselbe Wellenlange wie das Anregungslicht, aber eine erhöhte Intensität aufweist, um den Fluoreszenzfarbstoff außerhalb des verkleinerten Bereichs aus seinem fluoreszenzfähigen Singulett-Zustand in seinen vergleichsweise langlebigen, nicht fluoreszenzfähigen Triplett-Zustand zu pumpen. Aus diesem energetischen Triplett-Zustand gelangt der Fluoreszenzfarbstoff erst nach gewisser Zeit in seinen Singulett-Grundzustand zurück, aus dem heraus er wieder zur Fluoreszenz anregbar ist. Zur Entvölkerung des Singulett-Zustands bedarf es einer erheblich höheren Lichtleistung als für das Anregungslicht, das anschließend zum Anregen des Fluoreszenzfarbstoffs zur spontanen Emission von Fluoreszenzlicht verwendet wird. Diese hohen Intensitäten des Anregungslichts führen dazu, dass bereits in dem Triplett-Zustand befindliche Moleküle des Fluoreszenzfarbstoffs zu photochemischen Reaktionen angeregt werden, die zum Bleichen, d. h. zum Ausfall des Fluoreszenzfarbstoffs führen.

Aus Dyba, M et al, Focal Spots at Size λ/23 Open Up Far-Field Florescence Microscopy at 33 nm Axial Resolution. Physical Review Letters, American Physical Society, US. Bd. 88, Nr. 16, 22. April 2002, Seiten 163901-1, ISSN: 0031-9007, DOI 10.1103/PHYSREVLETT.88.163901 ist ein Verfahren zum räumlich hochauflösenden Abbilden einer mit einer Substanz markierten Struktur einer Probe, bei dem die Probe in der gemeinsamen Fokusebene von zwei einander gegenüberliegend angeordneten Objektiven angeordnet ist. Die Probe wird über eines der Objektive mit Anregungslicht beleuchtet, mit dem die Substanz zur Emission von Fluoreszenzlicht angeregt wird, wobei das emittierte Fluoreszenzlicht auf einen Detektor abgebildet wird. Um in Richtung der optischen Achse eine Auflösung unterhalb der Beugungsgrenze zu erreichen, wird die Probe über beide Objektive mit Abregungslicht beleuchtet, welches im Bereich der Fokusebene zur Interferenz gebracht wird und durch welches angeregte Moleküle der Substanz durch stimulierte Emission aus ihrem angeregten Zustand zurück in ihren Grundzustand überführt werden. Als Ausblick wird am Ende der Veröffentlichung von Dyba, M et al darauf hingewiesen, dass anstelle der Entvölkerung des angeregten Zustands durch stimulierte Emission auch andere Prozesse zur Entvölkerung des angeregten Zustands genutzt werden können. Als Beispiele werden das Konzept der "Ground State Depletion", wonach ein Molekül von seinem angeregten Zustand in einen langlebigen Dunkelzustand wie einen Triplett-Zustand transferiert wird, und die cis-trans-Isomerisation genannt.

Die US 6,184,535 B1 offenbart ein Verfahren zum räumlich hochauflösenden Abbilden einer mit einer Substanz markierten Struktur einer Probe, bei dem die Probe mit Licht einer ersten Wellenlänge beleuchtet wird. Durch das Licht mit der ersten Wellenlänge wird die Substanz von ihrem elektronischen Grundzustand in einen ersten angeregten Zustand angeregt. Bei der Rückkehr der Substanz aus ihrem ersten angeregten Zustand in den Grundzustand wird Lumineszenzlicht ausgesendet, welches mit einem Detektor registriert wird. Für ein räumlich hochaufgelöstes Abbilden wird die Probe zusätzlich mit Licht einer zweiten Wellenlänge beleuchtet, wobei die Beleuchtung der Probe mit dem Licht bei der zweiten Wellenlänge in einer Ebene der Probe erfolgt, die nur teilweise mit der Ebene überlappt, in der die Probe mit dem Licht der ersten Wellenlänge beleuchtet wird. Die zweite Wellenlänge ist dabei derart ausgewählt, dass die Substanz durch das Licht mit der zweiten Wellenlänge von dem ersten angeregten Zustand in einen zweiten angeregten Zustand angeregt wird. Im Bereich der Überlappung der beiden Ebenen wird die Substanz somit von ihrem ersten angeregten Zustand in ihren zweiten angeregten Zustand überführt. So soll erreicht werden, dass der Bereich der Probe, aus dem das mit dem Detektor registrierte Lumineszenzlicht stammen kann, im Wesentlichen auf den Bereich der Probe beschränkt ist, in dem diese ausschließlich mit dem Licht der ersten Wellenlänge beleuchtet wird.

Aus The Journal of Biological Chemistry, Vol. 275, No. 84, Seiten 25879-25882 (2000), ist ein Protein bekannt, das durch grünes Licht in zunehmendem Masse zur Fluoreszenz im roten Bereich anregbar ist, das aber bei Bestrahlung mit blauem Licht seine Fluoreszenzeigenschaften verliert. Dieser Prozess ist umkehrbar. Offenbar schaltet das grüne Licht das Protein in einen Konformationszustand, in dem es die Fluoreszenzeigenschaft hat, und regt gleichzeitig die Fluoreszenz an, während das blaue Licht das Protein in einen Konformationszustand ohne die Fluoreszenzeigenschaften umschaltet. Das Protein ist ein in der Seeanemone Anemonia sulcata vorkommendes natürliches Protein, dessen hier beschriebenen Funktionen durch gezielten Austausch einer Aminosäure verstärkt werden können.

Weiterhin ist es aus der Zeitschrift Nature Vol. 388, Seiten 355-358, (1997) bekannt, dass das Grün-Fluoreszierende-Protein (englisch: green-fluorescent protein, GFP) und Mutanten davon zwischen zwei Zuständen geschaltet werden können, wobei der eine sich von dem anderen spektral unterscheidet. Beide Proteine können als Fluoreszenzmarker in lebenden Zellen eingesetzt werden.

Aus der Publikation Nature, Vol. 420, Seiten 759-760, (2002) sind fluoreszierende Moleküle aus der Familie der Diarylethene bekannt, die sich zwischen einem fluoreszierenden und einem nichtfluoreszierenden Zustand beliebig hin-und herschalten lassen. Beide Zustände sind thermisch stabil, so dass der Schaltprozess, bei dem es sich um eine Photoisomerisierung oder Photocyclisierung handelt, mit vergleichsweise niedrigen Intensitäten eines optischen Signals erzwungen werden kann. Moleküle, die unter Lichteinfluss ihre Farbe verändern, werden allgemein als photochromenen Moleküle bezeichnet.

Aus der US-A-6,046,925 sind ein optischer Datenspeicher auf der Basis von photochromen fluoreszenten Proteinen sowie ein Verfahren zum Speichern und Rückgewinnen von Informationen unter Verwendung solcher photochromer fluoreszenter Proteine bekannt. Der Datenspeicher umfasst eine photochrome fluoreszente Proteineinheit, die aus einem ersten Zustand durch Bestrahlung mit einem Schreibsignal in einen zweiten Zustand überführbar ist. Konkret weist der optische Datenspeicher ein Medium mit einer Vielzahl von darin verteilten fluoreszenten Proteineinheiten auf. Das Medium kann als planare Oberflache oder Volumen ausgeformt sein. Vorzugsweise sind die fluoreszenten Proteineinheiten in dem optischen Datenspeicher einzeln adressierbar. Beim Speichern von Daten wird eine photochrome fluoreszente Proteineinheit adressiert und dem Schreibsignal ausgesetzt. Beim Rückgewinnen der Daten wird durch Bestrahlen der photochromen fluoreszenten Proteineinheit mit einem Lesesignal und Detektieren eines Messsignals von der photochromen fluoreszenten Proteineinheit bestimmt, ob sie sich in ihrem ersten oder ihrem zweiten Zustand befindet. Als Möglichkeit der Umsetzung dieses Verfahrens mit geringer Abmessung der einzelnen Datenpunkte werden bekannte Techniken der optischen Nahfeldmikroskopie und der Festkörperinversionslinsen angeführt.

Aus der US 5,289,407 ist ein Verfahren zum optischen Speichern von Informationen in einem dreidimensionalen mehrschichtigen Format bekannt, bei dem die Informationen in ein Photopolymer als Volumenelemente mit geändertem Brechungsindex eingeschrieben werden. Die Indexänderung resultiert aus einer Änderung des Photopolymers, die durch Zweiphotonenanregung hervorgerufen wird. Die derart eingeschriebenen Informationen können durch Differentialinterferenzkontrast- oder konfokale Mikroskopie ausgelesen werden.

Die US 4,288,861 A offenbart ein Verfahren zum optischen Speichern von Informationen in einem dreidimensionalen mehrschichtigen Format, bei dem über einen Mehr-Photonen-Absorptionsprozess räumlich selektiv eine chemische Reaktion eines Photopolymers als Volumenelement hervorgerufen wird. Die chemische Reaktion des Photopolymers hat dabei eine Brechungsindexänderung oder Änderung anderer physikalischer Eigenschaften zur Folge, wobei diese mit Lesemitteln ausgelesen werden kann.

### AUFGABE DER ERFINDUNG

Der Erfindung liegt die Aufgabe zugrunde, ein Verfahren zum räumlich hochauflösenden Abbilden einer Struktur einer Probe mit den Merkmalen des Oberbegriffs des Patentanspruchs 1 aufzuzeigen, das mit vergleichsweise geringem apparativem Aufwand durchführbar ist.

### ZUSAMMENFASSUNG DER ERFINDUNG

Die Aufgabe der Erfindung wird durch ein Verfahren mit den Merkmalen des Patentanspruchs 1 gelöst.

Vorteilhafte Ausführungsformen des neuen Verfahrens sind in den Unteransprüchen beschrieben.

### BESCHREIBUNG DER ERFINDUNG

Die Verwendung von Substanzen, die zwei Zustände mit unterschiedlichen optischen Eigenschaften aufweisen, ist ein zentraler Aspekt der Erfindung. Dabei kann mit einem Umschaltsignal die Substanz gezielt von dem ersten in den zweiten Zustand geschaltet werden. Dieser Vorgang ist umkehrbar. D.h., die Substanz kann auch wieder zurück in den ersten Zustand gebracht werden. Die optischen Eigenschaften der Substanz in dem ersten Zustand unterscheiden sich von denjenigen in dem zweiten Zustand dadurch, dass nur sie das Messsignal unterstützen. Es ist jedoch nicht zwingend, dass die relevanten optischen Eigenschaften "binär" sind, d.h. in dem einen Zustand zu 100 % und in dem anderen Zustand zu 0% vorliegen. Es ist vielmehr ausreichend, wenn bei den relevanten optischen Eigenschaften so große Unterschiede gegeben sind, dass sie eine zumindest überwiegende Zuordnung des Messsignals zu dem ersten Zustand erlauben.

Im Gegensatz zum Stand der Technik auf dem Gebiet der Fluoreszenzmikroskopie macht die Erfindung keinen Gebrauch von zwei einfachen Energiezuständen eines Moleküls zwischen denen das Molekül durch einfache energetische Anregung überführbar ist. Vielmehr unterscheiden sich die beiden Zustände mindestens hinsichtlich eines der folgenden Kriterien:
- Konformationszustand eines Moleküls,
- Strukturformel eines Moleküls,
- räumliche Anordnung von Atomen innerhalb eines Moleküls,
- räumliche Anordnung von Bindungen innerhalb eines Moleküls,
- Anlagerung weiterer Atome oder Moleküle an ein Molekül,
- Gruppierung von Atomen und/oder Molekülen,
- räumliche Orientierung eines Moleküls,
- Orientierung benachbarter Moleküle zueinander,
- von einer Vielzahl von Molekülen und/oder Atomen ausgebildete Ordnung.
Zum Überführen der entsprechenden Substanzen von ihrem ersten in ihren zweiten Zustand bewirkt das optische Umschaltsignal also beispielsweise eine Umlagerungen von Atomgruppen, eine Photoisomerisierung, insbesondere eine cis-trans Isomerisierung, eine Photozyklisierung, eine Protonierung oder De-Protonierungen, eine Spin-Umklappung, einen Elektronentransfer und/oder Energietransfer zwischen verbundenen Molekülen oder Moleküluntereinheiten.

Ein Vorteil der Erfindung gegenüber dem Stand der Technik auf dem Gebiet der Fluoreszenzmikroskopie besteht darin, dass die Zustände der in Frage kommenden Substanzen in der Regel eine um ein Vielfaches längere Lebensdauer als die an der Fluoreszenz beteiligten Energiezustände aufweisen. Die Lebensdauer des zweiten Zustands beträgt daher in der Regel mindestens 1 ns. Bevorzugt ist eine Lebensdauer von mindestens 10 ns. Besonders bevorzugt sind thermisch stabile Zustände. Zudem sind die Intensitäten, die zum Erreichen der Zustandsänderung mit dem Umschaltsignal erforderlich sind, relativ gering. Zahlreiche Umschaltprozesse, bei denen der Ausgangs- und/oder Endzustand relativ langlebig (> 10 ns) ist, können mit vergleichsweise niedrigen Intensitäten ausgelöst und in die Sättigung gebracht werden, weil es nur verhältnismäßig langsame oder manchmal sogar keine Prozesse gibt, die mit dem Umschaltprozess konkurrieren.

Die unterschiedlichen optischen Eigenschaften der beiden Zustände der Substanz können unterschiedliche spektrale Eigenschaften sein. Beispielsweise können die ersten optischen Eigenschaften gegenüber den zweiten optischen Eigenschaften unterschiedliche Absorptionen für ein optisches Testsignal aufweisen, wobei das Messsignal in Transmission oder auch in Reflektion beobachtet werden kann. Als unterschiedliche spektrale Eigenschaften bevorzugt sind unterschiedliche Lumineszenzen aus der Fluoreszenz, Phosphoreszenz, Elektrolumineszenz und Chemolumineszenz umfassenden Gruppe. Moleküle, die ihre spektralen Eigenschaften, insbesondere ihre Farbe verändern und die ebenfalls als Substanz zur Markierung der interessierenden Struktur im Rahmen der Erfindung geeignet sind, werden auch als photochrom bezeichnet.

Statt unterschiedlicher spektraler Eigenschaften können die beiden Zustände der Substanz auch unterschiedliche Polarisationseigenschaften, beispielsweise in Bezug auf ein optisches Testsignal oder ein von der Probe selbst emittiertes Messsignal, aufweisen.

Um bei dem neuen Verfahren die Beugungsgrenze bei der Ortsauflösung zu unterschreiten, sind die Substanz und das Umschaltsignal so aufeinander abzustimmen, dass das Überführen von dem ersten Zustand mit dem Umschaltsignal in den zweiten Zustand nichtlinear von der Intensität des Umschaltsignals abhängt. Dies wird erreicht, wenn die Überführung der Substanz in den zweiten Zustand überall dort vollständig bzw. im Wesentlichen vollständig erfolgt, wo das Umschaltsignal einen Sättigungsgrenzwert überschreitet. Konkret muss die Intensität des Umschaltsignals in dem gesamten Registrierbereich außerhalb des gezielt ausgelassenen räumlichen Bereichs den Sättigungsgrenzwert überschreiten, und gleichzeitig muss der gezielt ausgelassene räumliche Bereich ein lokales Intensitätsminimum des Umschaltsignals sein. Ein solches lokales Intensitätsminimum mit Nullstelle der Intensität kann durch ein Interferenzmuster bereitgestellt werden. Grundsätzlich können hierzu aber auch Projektionen eingesetzt werden; man kann das Umschaltsignal weiterhin unter einem spitzen oder stumpfen Winkel von der Seite einstrahlen. Darüber hinaus sind Hologramme zur Erzeugung lokaler Intensitätsminima des Umschaltsignals möglich. Mit den Intensitätsminima einfacher Interferenzmustern sind aber besonders leicht kleinste räumliche Bereiche definierbar, die von dem Umschaltsignal ausgelassen werden.

Bevorzugt werden bei den neuen Verfahren Substanzen eingesetzt, die mit einem anderen Schaltsignal von dem zweiten in den ersten Zustand überführbar sind. Bei dem andern Schaltsignal kann es sich wie bei dem Umschaltsignal um ein optisches Signal handeln. Es kann beispielsweise aber auch eine elektrisches oder thermisches Signal sein. Es ist weiterhin möglich, dass die Rückschaltung in den ersten Zustand spontan, d.h. bereits bei Umgebungstemperatur thermisch getrieben, erfolgt. So ist es bekannt, dass Moleküle die eine photoinduzierte cis-trans-Isomerisierung durchlaufen, rein thermisch in den ersten Zustand zurück kommen können. Mit dem anderen Schaltsignal kann die Substanz aber gezielt in den ersten Zustand zurück gebracht werden, was vorteilhaft sein kann, um das Verfahren insgesamt zu beschleunigen.

Das andere Schaltsignal wird bevorzugt vor dem Umschaltsignal bzw. nach dem Registrieren des Messsignals angewandt. Sofern das Umschalten mit dem Umschaltsignal durch das andere Schaltsignal nicht wesentlich beeinträchtigt wird, kann das andere Schaltsignal auch noch während des Aufbringens des Umschaltsignals auf die Probe aufgebracht werden. Es ist weiterhin nicht erforderlich, das andere Schaltsignal auf den interessierenden räumlichen Bereich einzugrenzen, was den Aufwand für das Aufbringen bei optischen Schaltsignalen reduziert und andere Arten von anderen Schaltsignalen überhaupt erst ermöglicht.

Auf die Probe wird ein Testsignal gerichtet, um das zu registrierende Messsignal zu erzeugen, wobei das Testsignal nach dem Umschaltsignal auf die Probe aufgebracht wird. Dabei kann auch das Testsignal über einen den gezielt ausgelassenen räumlichen Bereich einschließenden größeren Bereich auf die Probe aufgebracht werden. Die für die Erhöhung der Ortsauflösung des neuen Verfahrens erforderliche räumliche Eingrenzung wird von dem optischen Umschaltsignal geleistet.

Wenn es sich bei dem Messsignal um von der Probe emittiertes Licht handelt, kann ein entsprechendes Anregungssignal, das als Testsignal eingesetzt wird, auch gleichzeitig mit dem Umschaltsignal auf die Probe aufgebracht werden. Es sollte aber in jedem Fall später oder frühestens gleichzeitig mit dem anderen Schaltsignal auf die Probe aufgebracht werden, soweit das Anregungssignal und das andere Schaltsignal nicht sowieso identisch sind.

Um eine Probe vollständig abzubilden, ist es erforderlich, dass die Probe mit dem von dem Umschaltsignal gezielt ausgelassenen Bereich abgerastert, d.h. an allen Punkten abgetastet, wird. Dabei kann die Probe zu einem Zeitpunkt auch in mehreren voneinander beabstandeten Punkten, d.h. definierten Bereichen, gleichzeitig gemessen werden. Dabei werden mehrere optische Messsignale, die der Substanz in dem ersten Zustand zuzuordnen sind, für mehrere Registrierbereiche, die jeweils neben Bereichen, in denen die Substanz in den zweiten Zustand überführt ist, einen gezielt ausgelassenen Bereich umfassen, zwar gleichzeitig aber getrennt voneinander registriert. Die Rasterung kann jeweils durch eine räumliche Verschiebung der verwendeten Schaltsignale, insbesondere des Umschaltsignals, gegenüber den Koordinaten der Probe erfolgen. Da alle von dem Umschaltsignal gezielt ausgelassenen räumlichen Bereiche vorzugsweise Intensitätsminima eines Interferenzmusters sind, kann die Rasterung durch die Verschiebung einer oder mehrerer Interferenzminima des Umschaltsignals erfolgen. Dabei kann diese Verschiebung durch eine reine Phasenverschiebung der interferierenden Strahlen bewerkstelligt werden.

Beim Abrastern einer Probe nach dem neuen Verfahren ergibt sich eine zyklische Abfolge der Schritte: Überführen der Substanz in Bereichen der Probe mit dem Umschaltsignal in den zweiten Zustand, wobei ein definierter Bereich gezielt ausgelassen wird; Registrieren des optischen Messsignals, das der Substanz in dem ersten Zustand zuzuordnen ist, für einen den jeweils gezielt ausgelassenen Bereich umfassenden Registrierbereich; und Überführen der Substanz in den ersten Zustand. Dabei reicht es, wie bereits angedeutet wurde, aus, wenn nur das Umschaltsignal mit seinem Intensitätsminimum genau auf den jeweils interessierenden definierten Bereich der Probe ausgerichtet wird.

Vorzugsweise wird die Substanz mit den unterschiedlichen optischen Eigenschaften aus der Gruppe der Proteine ausgewählt. Hierzu gehören insbesondere die bekannten Proteine asCP (asF595) und T70a/A148S/S165V, welche über zwei Konformationszustände mit geeigneten spektralen Eigenschaften verfügen, oder auch das Green-Fluorescent-Protein (GFP) und davon abgeleitete Mutanten.

Proteine als markierende Substanzen können auch auf gentechnischem Wege in eine biologische Probe eingebracht werden, so dass keine nachträgliche Markierung der Struktur der Probe mit der Substanz erforderlich ist, die die Probe negativ beeinträchtigen oder zumindest durch den Schritt des Markierens verändern kann. Wenn ein gentechnisches Markieren der interessierenden Strukturen der Probe nicht möglich ist, kann die Struktur der Probe in an sich bekannter Weise mit der Substanz markiert werden. Beispielsweise können dabei Hilfssubstanzen verwendet werden, die an die interessierende Struktur selektiv anbinden und an die wiederum die Substanz angebunden ist oder wird. Aus dem Bereich des Einfärbens von Proben für die Fluoreszenzmikroskopie sind dem Fachmann hier viele Vorgehensweisen bekannt. Die Probe kann auch von Natur aus über Moleküle mit geeigneten optischen Zuständen, die die Anforderungen an die Substanz für das neue Verfahren erfüllen.

Das neue Abbildungsverfahren kann nach dem Markieren der Strukturen mit der fluoreszierenden Substanz auf einem üblichen Fluoreszenzmikroskop durchgeführt werden, wobei der zusätzliche Aufwand für die Auflösungsverbesserung unter die Beugungsgrenze vergleichsweise gering ist und sich auf zusätzliche Mittel zum Bereitstellen des optischen Umschaltsignals beschränken kann. Diese Mittel könne beispielsweise einen einfachen Laser oder auch eine konventionelle Lampe umfassen. In einer bevorzugten Ausführung, bei der zur Beschleunigung des Verfahrens in mehreren Bereichen gleichzeitig gemessen wird, werden die Messsignale aus den einzelnen Bereichen gleichzeitig mit einer (CCD-) Kamera ausgelesen. Das Gesamtbild der Probe ergibt sich dann aus der Zusammenfügung mehrerer Bilder mit unterschiedlichen Positionen der vermessenen Bereiche in der Probe.

### KURZBESCHREIBUNG DER FIGUREN

Im Folgenden wird die Erfindung anhand von in den Figuren dargestellten Details weiter erläutert und beschrieben.
- **Fig. 1**: zeigt symbolisch zwei Konformationszustände eines Moleküls oder Molekülkomplexes, und
- **Fig. 2**: zeigt schematisch eine Anordnung zur Durchführung des neuen Verfahrens.

### FIGURENBESCHREIBUNG

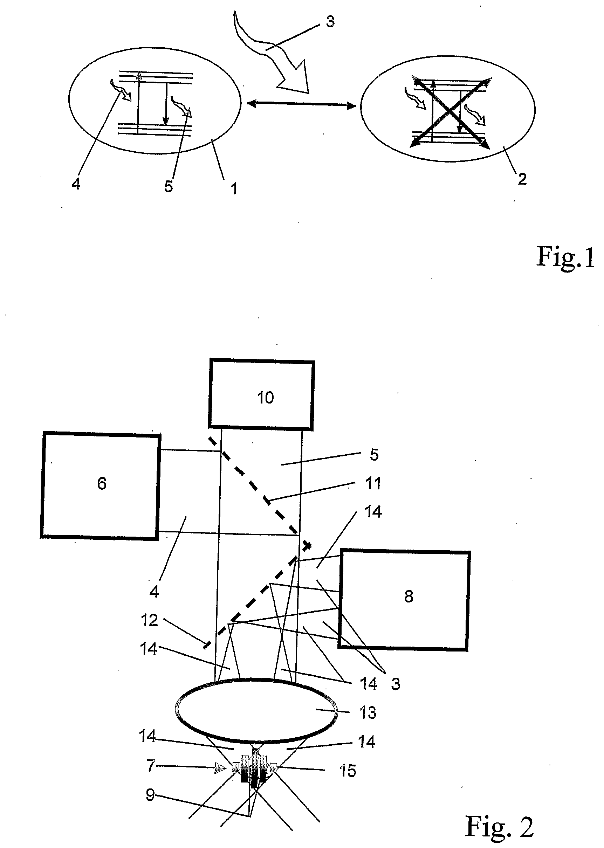

**Fig. 1** zeigt symbolisch ein Molekül oder einen Molekülkomplex, das bzw. der sich in zwei verschiedenen Zuständen 1 und 2 befinden kann. Der erste Zustand 1 ist dabei fluoreszenztauglich, der zweite Zustand 2 dagegen nicht. Durch Beleuchtung mit einem Umschaltsignal 3 mit einer bestimmten Wellenlänge kann eine gezielter Wechsel von dem ersten Zustand 1 in den zweiten Zustand 2 induziert werden. Aus dem zweiten Zustand 2 kann das Molekül beispielsweise spontan in den ersten Zustand 1 zurückkehren. Bevorzugt ist es aber, wenn beide Zustände 1 und 2 thermisch stabil sind und zum Zurückschalten in den ersten Zustand 1 ein weiteres optisches Schaltsignal verwendet wird.

**Fig. 2** zeigt schematisch eine mögliche Anordnung zur Durchführung der Erfindung mit zwei Strahlteilern 11 und 12 sowie einem Objektiv 13. Eine Probe 7 wird hier einerseits durch ein Anregungssignal, das als Testsignal 4 verwendet wird, von einer Fluoreszenzanregung 6 zur Fluoreszenz angeregt, andererseits aber durch das Umschaltsignal 3 von einem Fluoreszenzverhinderungsmittel 8 an definierbaren Orten an der Fluoreszenz gehindert, indem Moleküle reversibel ortsabhängig in den nicht fluoreszenzfähigen zweiten Zustand versetzt werden. Im gezeigten Beispiel geschieht dies durch gekreuzte interferenzfähige Strahlen 14. Fluoreszenz kann in diesem Fall nur noch in schmalen räumlichen Bereichen 9 erzeugt werden, die bei geeigneten Bedingungen, wie der Sättigung des Umschaltens, schmaler sind als die Beugungsgrenze. Durch rasterndes Verschieben des Interferenzmusters 15 und das sequentielle Erfassen und Auslesen der Fluoreszenz als Messsignal 5 mit einer Kamera 10 kann die ganze Probe 7 mit Hochauflösung erfasst werden.

## Patentansprüche

1. Verfahren zum räumlich hochauflösenden Abbilden einer mit einer Substanz markierten Struktur einer Probe (7), mit den Schritten:
- Auswählen der Substanz aus einer Gruppe von Substanzen, die mit einem optischen Umschaltsignal (3) wiederholt aus einem ersten Zustand (1) mit ersten optischen Eigenschaften in einen zweiten Zustand (2) mit zweiten optischen Eigenschaften überführbar sind und die aus dem zweiten Zustand (2) in den ersten Zustand (1) zurückkehren können,
- Überführen der Substanz in Bereichen der Probe (7) mit dem Umschaltsignal (3) in den zweiten Zustand (2), wobei ein definierter Bereich (9) gezielt ausgelassen wird,
- Aufbringen eines Testsignals (4) auf die Probe (7) um ein optisches Messsignal (5) zu erzeugen, das der Substanz in dem ersten Zustand (1) zuzuordnen ist, und
- Registrieren des optischen Messsignals (5) für einen Registrierbereich, der neben Bereichen, in denen die Substanz in den zweiten Zustand überführt ist, den gezielt ausgelassenen Bereich (9) umfasst,
**dadurch gekennzeichnet, dass** das Testsignal (4) nach dem Umschaltsignal (3) auf die Probe (7) aufgebracht wird und dass die Substanz aus einer Untergruppe von Substanzen ausgewählt wird, bei denen sich die beiden Zustände (1, 2) mindestens hinsichtlich eines der folgenden Kriterien unterscheiden:
- Konformationszustand eines Moleküls,
- Strukturformel eines Moleküls,
- räumliche Anordnung von Atomen innerhalb eines Moleküls,
- räumliche Anordnung von Bindungen innerhalb eines Moleküls,
- Anlagerung weiterer Atome oder Moleküle an ein Molekül,
- Gruppierung von Atomen und/oder Molekülen,
- räumliche Orientierung eines Moleküls,
- Orientierung benachbarter Moleküle zueinander,
- von einer Vielzahl von Molekülen und/oder Atomen ausgebildete Ordnung.

2. Verfahren nach Anspruch 1, **dadurch gekennzeichnet, dass** die Lebensdauer des zweiten Zustands (2) länger als 1 ns ist.

3. Verfahren nach einem der Ansprüche 1 und 2, **dadurch gekennzeichnet, dass** die unterschiedlichen optischen Eigenschaften der beiden Zustände (1, 2) der Substanz unterschiedliche spektrale Eigenschaften sind.

4. Verfahren nach Anspruch 3, **dadurch gekennzeichnet, dass** die ersten optischen Eigenschaften gegenüber den zweiten optischen Eigenschaften unterschiedliche Absorptionen für das Testsignal (4) aufweisen.

5. Verfahren nach Anspruch 3, **dadurch gekennzeichnet, dass** die ersten optischen Eigenschaften gegenüber den zweiten optischen Eigenschaften unterschiedliche Lumineszenzen aus der Fluoreszenz, Phosphoreszenz, Elektrolumineszenz und Chemolumineszenz umfassenden Gruppe aufweisen.

6. Verfahren nach einem der Ansprüche 1 und 2, **dadurch gekennzeichnet, dass** die unterschiedlichen optischen Eigenschaften der Zustände (1, 2) der Substanz unterschiedliche Polarisationseigenschaften sind.

7. Verfahren nach einem der Ansprüche 1 bis 6, **dadurch gekennzeichnet, dass** die Substanz und das Umschaltsignal (3) so aufeinander abgestimmt werden, dass sich überall dort, wo die Intensität des Umschaltsignals (3) einen Sättigungsgrenzwert überschreitet, vollständig der zweite Zustand (2) der Substanz einstellt.

8. Verfahren nach Anspruch 7, **dadurch gekennzeichnet, dass** die Intensität des Umschaltsignals (3) in dem gesamten Registrierbereich außerhalb des gezielt ausgelassenen Bereichs (9) den Sättigungsgrenzwert überschreitet und dass der gezielt ausgelassene räumliche Bereich (9) ein lokales Intensitätsminimum des Umschaltsignals (3) ist.

9. Verfahren nach Anspruch 8, **dadurch gekennzeichnet, dass** das lokale Intensitätsminimum des Umschaltsignals (3) eine Intensitätsminimum mit Nullstelle eines Interferenzmusters (15) ist.

10. Verfahren nach einem der Ansprüche 1 bis 9, **dadurch gekennzeichnet, dass** die Substanz aus der Gruppe von Substanzen ausgewählt wird, die mit einem anderen Schaltsignal von dem zweiten Zustand (2) in den ersten Zustand (1) überführbar sind.

11. Verfahren nach Anspruch 10, **dadurch gekennzeichnet, dass** das andere Schaltsignal vor oder gleichzeitig mit dem Umschaltsignal (3) auf die Probe (7) aufgebracht wird.

12. Verfahren nach Anspruch 10 oder 11, **dadurch gekennzeichnet, dass** das andere Schaltsignal über einen den Registrierbereich einschließenden größeren Bereich auf die Probe (7) aufgebracht wird.

13. Verfahren nach einem der Ansprüche 1 bis 12, **dadurch gekennzeichnet, dass** das Testsignal (4) über einen den gezielt ausgelassenen Bereich (9) einschließendes größeren Bereich auf die Probe (7) aufgebracht wird.

14. Verfahren nach Anspruch 5 und Anspruch 10, **dadurch gekennzeichnet, dass** die Lumineszenz durch das andere Schaltsignal angeregt wird.

15. Verfahren nach einem der Ansprüche 1 bis 14, **dadurch gekennzeichnet, dass** die Probe (7) mit dem gezielt ausgelassenen Bereich (9) abgerastert wird.

16. Verfahren nach einem der Ansprüche 1 bis 15, **dadurch gekennzeichnet, dass** gleichzeitig mehrere optische Messsignale (5), die der Substanz in dem ersten Zustand (1) zuzuordnen sind, für mehrere Registrierbereiche, die jeweils neben Bereichen, in denen die Substanz in den zweiten Zustand (2) überführt ist, einen gezielt. ausgelassenen Bereich (9) umfassen, getrennt voneinander registriert werden.

17. Verfahren nach einem der Ansprüche 1 bis 16, **dadurch gekennzeichnet, dass** in zyklischer Abfolge die Schritte
- Überführen der Substanz in Bereichen der Probe (7) mit dem Umschaltsignal (3) in den zweiten Zustand (2), wobei ein definierter Bereich (9) gezielt ausgelassen wird,
- Registrieren des optischen Messsignals (5), das der Substanz in dem ersten Zustand (1) zuzuordnen ist, für einen den jeweils gezielt ausgelassenen definierten Bereich (9) umfassenden Registrierbereich,
- Überführen der Substanz in den ersten Zustand (1),
für verschiedene definierte Bereiche der Probe (7) nacheinander ausgeführt werden.

18. Verfahren nach einem der Ansprüche 1 bis 17, **dadurch gekennzeichnet, dass** die Substanz aus der Untergruppe von Substanzen ausgewählt wird, die Proteine umfassen.

19. Verfahren nach Anspruch 18, **dadurch gekennzeichnet, dass** die Substanz aus der Untergruppe von Substanzen ausgewählt wird, die fluoreszierende Proteine umfassen.

20. Verfahren nach einem der Ansprüche 1 bis 19, **dadurch gekennzeichnet, dass** zum Markieren deren Strukturen die Substanz auf gentechnischem Wege in eine biologische Probe (7) eingebracht wird.

21. Verwendung eines Fluoreszenzmikroskops bei der Durchführung des Verfahrens nach einem der Ansprüche 1 bis 19.

## Claims

1. Method of spatially high resolution imaging a structure of a sample (7), the structure being marked with a substance, the method comprising:
- selecting the substance from a group of substances which are repeatedly transferable out of a first state (1) with first optical properties into a second state (2) with second optical properties by means of an optical switchover signal (3) and which may return out of the second state (2) into the first state (1),
- transferring the substance in areas of the sample (7) by means of the switchover signal (3) into the second state (2), wherein a defined area (9) is purposefully omitted,
- applying a test signal (4) onto the sample (7) to generate an optical measurement signal (5) which is assignable to the substance in the first state (1), and
- registering the optical measurement signal (5) for a registration area which, besides areas in which the substance is transferred into the second states, includes the purposefully omitted area (9),
**characterised in that** the test signal (4) is applied to the sample (7) after the switchover signal (3) and that the substance is selected from a subgroup of substances in which the two states (1, 2) differ with regard to at least one of the following criteria:
- state of conformation of a molecule,
- structure of a molecule
- spatial arrangement of atoms within a molecule,
- spatial arrangement of bonds within a molecule,
- attachment of further atoms or molecules to a molecule,
- grouping of atoms and/or molecules,
- spatial orientation of a molecule,
- orientation of neighbouring molecules with regard to each other,
- order formed by a multitude of molecules and/or atoms.

2. Method of claim 1, **characterised in that** the lifetime of the second state (2) is longer than 1 ns.

3. Method of any of the claims 1 and 2, **characterised in that** the different optical properties of the two states (1, 2) of the substance are different spectral properties.

4. Method of claim 3, **characterised in that** the first optical properties, as compared to the second optical properties, comprise different absorptions for the test signal (4).

5. Method of claim 3, **characterised in that** the first optical properties, as compared to the second optical properties, comprise different luminescences from the group including fluorescence, phosphorescence, electroluminescence and chemoluminescence.

6. Method of any of the claims 1 and 2, **characterised in that** the different optical properties of the states (1, 2) of the substance are different polarisation properties.

7. Method of any of the claims 1 to 6, **characterised in that** the substance and the switchover signal (3) are adapted to each other in such a way that everywhere, where the intensity of the switchover signal (3) exceeds a saturation threshold value, the second state (2) of the substance is set completely.

8. Method of claim 7, **characterised in that** the intensity of the switchover signal (3) in the entire registration area outside the purposefully omitted area (9) exceeds the saturation threshold value and that the purposefully omitted area (9) is a local intensity minimum of the switchover signal (3).

9. Method of claim 8, **characterised in that** the local intensity minimum of the switchover signal (3) is an intensity minimum with a zero point of an interference pattern (15).

10. Method of any of the claims 1 to 9, **characterised in that** the substance is selected from the group of substances which are transferable by means of another switching signal out of the second state (2) into the first state (1).

11. Method of claim 10, **characterised in that** the other switching signal is applied to the sample (7) prior to or at the same time as the switchover signal (3).

12. Method of claim 10 or 11, **characterised in that** the other switching signal is applied over a larger area of the sample (7) including the registration area.

13. Method of any of the claims 1 to 12, **characterised in that** the test signal (4) is applied over a larger area of the sample (7) including the purposefully omitted area (9).

14. Method of claim 5 and claim 10, **characterised in that** the luminescence is excited by the other switching signal.

15. Method of any of the claims 1 to 14, **characterised in that** the sample (7) is scanned with the purposefully omitted area (9).

16. Method of any of the claims 1 to 15, **characterised in that** a plurality of optical measurement signals (5) which are assignable to the substance in the first state (1) are simultaneously separately registered for a plurality of registration areas which each, besides areas in which the substance is transferred into the second state (2), include a purposefully omitted area (9).

17. Method of any of the claims 1 to 16, **characterised in that**, in a cyclic sequence, the steps
- transferring the substance in areas of the sample (7) by means of the switchover signal (3) into the second state (2), wherein a defined area (9) is purposefully omitted,
- registering the optical measurement signal (5) which is assignable to the substance in the first state (1) for a registration area including the respective purposefully omitted defined area (9),
- transferring the substance into the first state (1),
are one after the other executed for different defined areas of the sample (7).

18. Method of any of the claims 1 to 17, **characterised in that** the substance is selected from a subgroup of substances which include proteins.

19. Method of claim 18, **characterised in that** the substance is selected from the subgroup of substances which include fluorescent proteins.

20. Method of any of the claims 1 to 19, **characterized in that**, for marking its structures, the substance is introduced into a biological sample (7) by genetic engineering.

21. Use of a fluorescence microscope in executing the method of any of the claims 1 to 19.

## Revendications

1. Procédé de représentation spatiale à haute résolution d'une structure marquée avec une substance d'un échantillon (7), comprenant les étapes suivantes :
- sélection de la substance dans un groupe de substances, qui peuvent passer, de manière répétitive, avec un signal de commutation optique (3), d'un premier état (1) avec des premières propriétés optiques vers un deuxième état (2) avec des deuxièmes propriétés optiques, et qui peuvent retourner du deuxième état (2) au premier état (1),
- passage de la substance, dans certaines zones de l'échantillon (7), avec le signal de commutation (3), au deuxième état (2), une zone définie (9) étant exclue de manière ciblée,
- application d'un signal de test (4) sur l'échantillon (7) afin de générer un signal de mesure optique (5) qui doit être mis en correspondance avec la substance dans le premier état (1) et
- enregistrement du signal de mesure optique (5) pour une zone d'enregistrement qui comprend, en plus de zones dans lesquelles la substance est mise dans le deuxième état, la zone exclue de manière ciblée (9),
**caractérisé en ce que** le signal de test (4) est appliqué sur l'échantillon (7) après le signal de commutation (3) et **en ce que** la substance est sélectionnée dans un sous-groupe constitué de substances pour lesquelles les deux états (1, 2) se distinguent au moins en une fonction des critères suivants:
- état de conformation d'une molécule,
- formule de structure d'une molécule,
- disposition spatiale des atomes à l'intérieur d'une molécule,
- disposition spatiale des liaisons à l'intérieur d'une molécule,
- addition d'atomes ou de molécules supplémentaires à une molécule,
- groupement d'atomes et/ou de molécules,
- orientation spatiale d'une molécule,
- orientation de molécules voisines entre elles,
- ordonnancement constitué d'une pluralité de molécules et/ou d'atomes.

2. Procédé selon la revendication 1, **caractérisé en ce que** la durée de vie du deuxième état (2) est supérieure à 1 ns.

3. Procédé selon l'une des revendications 1 et 2, **caractérisé en ce que** les différentes propriétés optiques des deux états (1, 2) de la substance sont des propriétés spectrales différentes.

4. Procédé selon la revendication 3, **caractérisé en ce que** les premières propriétés optiques présentent, par rapport aux deuxièmes propriétés optiques, des absorptions différentes pour le signal de test (4).

5. Procédé selon la revendication 3, **caractérisé en ce que** les premières propriétés optiques présentent, par rapport aux deuxièmes propriétés optiques, des luminescences différentes dans le groupe comprenant la fluorescence, la phosphorescence, l'électroluminescence et la chimioluminescence.

6. Procédé selon l'une des revendications 1 et 2, **caractérisé en ce que** les différentes propriétés optiques des deux états (1, 2) de la substance sont des propriétés de polarisation différentes.

7. Procédé selon l'une des revendications 1 à 6, **caractérisé en ce que** la substance et le signal de commutation (3) sont adaptés l'un à l'autre de façon à ce que partout où l'intensité du signal de commutation (3) dépasse une valeur limite de saturation, le deuxième état (2) de la substance apparaît.

8. Procédé selon la revendication 7, **caractérisé en ce que** l'intensité du signal de commutation (3) dépasse, dans l'ensemble de la zone d'enregistrement à l'extérieur de la zone exclue de manière ciblée (9), la valeur limite de saturation et **en ce que** la zone spatiale exclue de manière ciblée (9) est un minimum local de l'intensité du signal de commutation (3).

9. Procédé selon la revendication 8, **caractérisé en ce que** le minimum local de l'intensité du signal de commutation (3) est un minimum d'intensité avec un point zéro d'un motif d'interférences (15).

10. Procédé selon l'une des revendications 1 à 9, **caractérisé en ce que** la substance est sélectionnée dans le groupe de substances qui peuvent passer, avec un autre signal de commutation, du deuxième état (2) au premier état (1).

11. Procédé selon la revendication 10, **caractérisé en ce que** l'autre signal de commutation est appliqué à l'échantillon (7) avant ou en même temps que le signal de commutation (3).

12. Procédé selon la revendication 10 ou 11, **caractérisé en ce que** l'autre signal de commutation est appliqué à l'échantillon (7) sur une zone importante incluant la zone d'enregistrement.

13. Procédé selon l'une des revendications 1 à 12, **caractérisé en ce que** le signal de test (4) est appliqué à l'échantillon (7) sur une zone importante incluant la zone exclue de manière ciblée (9).

14. Procédé selon la revendication 5 et la revendication 10, **caractérisé en ce que** la luminescence est excitée par l'autre signal de commutation.

15. Procédé selon l'une des revendications 1 à 14, **caractérisé en ce que** l'échantillon (7) est balayé avec la zone exclue de manière ciblée (9).

16. Procédé selon l'une des revendications 1 à 15, **caractérisé en ce que** plusieurs signaux de mesure optiques (5), qui doivent être mis en correspondance avec la substance dans le premier état (1), sont enregistrés simultanément séparément les uns des autres, pour plusieurs zones d'enregistrement, qui comprennent chacune, en plus de zones dans lesquelles la substance passe dans le deuxième état (2), une zone exclue de manière ciblée (9).

17. Procédé selon l'une des revendications 1 à 16, **caractérisé en ce que** les étapes suivantes sont exécutées de manière cyclique :
- passage de la substance, dans certaines zones de l'échantillon (7), avec le signal de commutation (3), dans le deuxième état (2), une zone définie (9) étant exclue de manière ciblée,
- enregistrement du signal de mesure optique (5), qui doit être mis en correspondance avec le premier état (1), pour une zone d'enregistrement comprenant une zone définie exclue de manière ciblée (9),
- passage de la substance dans le premier état (1), successivement pour différentes zones définies de l'échantillon (7).

18. Procédé selon l'une des revendications 1 à 17, **caractérisé en ce que** la substance est sélectionnée dans le sous-groupe de substances qui comprend des protéines.

19. Procédé selon la revendication 18, **caractérisé en ce que** la substance est sélectionnée dans le sous-groupe de substances qui comprend des protéines fluorescentes.

20. Procédé selon l'une des revendications 1 à 19, **caractérisé en ce que**, pour le marquage de ses structures, la substance est introduite, par génie génétique, dans un échantillon biologique (7).

21. Utilisation d'un microscope à fluorescence lors de l'exécution du procédé selon l'une des revendications 1 à 19.
